# EUROPÄISCHE PATENTSCHRIFT

(11) **EP 4 099 182 B1**
(45) Veröffentlichungstag und Bekanntmachung des Hinweises auf die Patenterteilung: **24.09.2025**
(21) Anmeldenummer: 22172460.2
(22) Anmeldetag: 10.05.2022
(51) Int. Cl.: G06F 16/27, G06F 16/29

(54) **VERFAHREN ZUM AUFBAUEN UND AKTUALISIEREN EINER DATENBANK FÜR LADEEINRICHTUNGEN UND KRAFTFAHRZEUG**
METHOD FOR ESTABLISHING AND UPDATING A DATABASE FOR CHARGING DEVICES AND MOTOR VEHICLE
PROCÉDÉ DE CRÉATION ET DE MISE À JOUR D'UNE BANQUE DE DONNÉES POUR DISPOSITIF DE CHARGE ET VÉHICULE AUTOMOBILE

(30) Priorität: 03.06.2021 DE 102021205667
(43) Veröffentlichungstag der Anmeldung: 07.12.2022
(73) Patentinhaber: Volkswagen Aktiengesellschaft, 38440 Wolfsburg (DE)
(72) Erfinder: Hoffmann, Fabian Merlin, 38114 Braunschweig (DE)

(56) Entgegenhaltungen:
- WO-A1-2011/098195
- CN-B- 101 893 442
- US-A1- 2013 210 460

## Beschreibung

Die Erfindung betrifft ein Verfahren zum Aufbau und Aktualisieren einer Datenbank für Ladeeinrichtungen und ein Kraftfahrzeug.

Es gibt zur Zeit eine Vielzahl von verschiedenen Anbietern von Ladeinfrastruktur für Elektro- oder Plug-In-Hybridfahrzeuge im öffentlichen Raum. Dadurch sind meist nicht alle Ladeeinrichtungen in den Datenbanken eines Kraftfahrzeugs eines bestimmten Herstellers oder in den Online-Datenbanken des Herstellers und/oder seines Partnernetzwerks eingetragen und verortet. Die meisten Datenbanken sind derart ausgebildet, dass der Nutzer manuell Ladeeinrichtungen hinzufügen kann, was aber sehr mühselig ist.

Aus der US 10,272,793 B2 ist ein Verfahren bekannt, wo ein Nutzer eine Ladeanfrage stellt, wobei ihm dann Ladeeinrichtungen angezeigt werden, die bestimmten Kriterien entsprechen. Dabei ist auch beschrieben, dass diese Liste von einem Server, einer straßenseitigen Infrastruktur oder einer Ladeinfrastruktur übermittelt werden kann.

Aus der DE 10 2009 042 627 A1 ist ein Verfahren zum Orten von verfügbaren Ladestationen für ein Fahrzeug mit einem mindestens teilweise elektrischen Antrieb bekannt, mit den folgenden Schritten:
- Senden einer Positions-/Zustandsanfrage von dem Fahrzeug,
- Senden von Positions-/Zustandsdaten von Ladestationen zu dem Fahrzeug als Reaktion auf ein Empfangen der Positions-/Zustandsanfragen von dem Fahrzeug an den Ladestationen, und
- Anzeigen derjenigen Ladestationen in dem Fahrzeug, deren Positions-/Zustandsdaten anzeigen, dass sie verfügbare Ladestationen in einer vorbestimmten Reichweite sind.

Aus der DE 11 2012 004 835 T5 ist ein Verfahren zum Überarbeiten von Daten in einem Fahrzeugnavigationssystem, das dazu konfiguriert ist, ein Fahrzeug zu einem anzufahrenden Sonderziel zu navigieren, bekannt, umfassend folgende Verfahrensschritte:
- Bereitstellen einer Datenbank mit geografischen Informationen, die Standortinformationen für eine Vielzahl von Sonderzielen und eine Vielzahl von Straßen speichert,
- Ermitteln eines Ladezustandes eines Fahrzeugs,
- Aufzeichnen eines Standorts des Fahrzeugs, wenn der Ladezustand des Fahrzeugs angibt, dass das Fahrzeug momentan aufgeladen wird, und
- Verwenden des Standorts des Fahrzeugs zu dem Zeitpunkt, zu dem der Ladezustand des Fahrzeugs angibt, dass das Fahrzeug momentan aufgeladen wird, um einen Standort einer Ladestation in der Datenbank mit geografischen Informationen zu aktualisieren.

Aus der DE 10 2009 018 073 A1 ist ein Verfahren zum Aktualisieren einer geografischen Datenbank bekannt, bei dem basierend auf von einem Fahrzeugnavigationssystem gelieferter Information festgestellt wird, ob sich ein Fahrzeug in einer Position auf einer Straße befindet, wobei unter Verwendung einer im Fahrzeug montierten Kamera ein geografisch kodiertes Bild erzeugt wird, falls, gemäß der vom Fahrzeugnavigationssystem gelieferten Information, sich das Fahrzeug nicht in einer Position auf der Straße befindet. Weiter wird das kodierte Bild analysiert, um festzustellen, ob eine Aktualisierung der geografischen Datenbank erforderlich ist.

Aus der WO 2011/098195 A1 ist ein Verfahren zum Aufbauen und Aktualisieren einer Datenbank für Ladeeinrichtungen bekannt, wobei aufgrund einer Änderung des Ladezustandes auf das Vorhandensein einer Ladeeinrichtung geschlossen wird. Vorzugsweise ist vorgesehen, dass aus einem Änderungsprofil des Ladezustandes auf die At der Ladeeinrichtung geschlossen wird. Alle notwendigen Daten erzeugt dabei das Kraftfahrzeug selbst.

Aus der CN 101 893 442 B ist ein NFC-Terminal zur Übermittlung von Adressdaten von Firmen für Navigationszwecke bekannt.

Aus der US 2013/210460 A1 ist ein Verfahren bekannt, wobei für ein mobiles drahtloses Kommunikationsgerät Sicherheitsmeldungsüberwachungsvorgänge und/oder Sicherheitsmeldungsübertragungsvorgänge gesteuert werden. Die Periodizität der Sicherheitsmeldungsüberwachung und/oder der Sicherheitsmeldungsübertragung variiert je nach Umgebung des mobilen Drahtlosgeräts. Die Sendeleistung für die Übertragung von Sicherheitsmeldungen wird abhängig von der Umgebung des mobilen Endgeräts variiert. In einigen Ausführungsformen werden die Überwachung und die Übertragung von Sicherheitsmeldungen deaktiviert, wenn festgestellt wird, dass sich das Mobilgerät in einem Gebäude oder einem Fahrzeug befindet. In einigen Ausführungsformen wird die Überwachungsrate und die Übertragungsrate von Sicherheitsnachrichten in Abhängigkeit von der Nähe zum Fahrzeugverkehr und/oder der Stärke des erkannten Fahrzeugverkehrs variiert. In einigen Ausführungsformen wird die Sendeleistung für Sicherheitsmeldungen in Abhängigkeit von der Nähe zum Fahrzeugverkehr und/oder der Stärke des erkannten Fahrzeugverkehrs variiert.

Der Erfindung liegt das technische Problem zugrunde, ein verbessertes Verfahren zum Aufbauen und Aktualisieren einer Datenbank für Ladeeinrichtungen zur Verfügung zu stellen sowie ein hierfür geeignetes Kraftfahrzeug zu schaffen.

Die Lösung des technischen Problems ergibt sich durch ein Verfahren mit den Merkmalen des Anspruchs 1 sowie ein Kraftfahrzeug mit den Merkmalen des Anspruchs 6. Weitere vorteilhafte Ausgestaltungen der Erfindung ergeben sich aus den Unteransprüchen.

Das Verfahren zum Aufbau und Aktualisieren einer Datenbank für Ladeeinrichtungen, wobei die Datenbank in einem Kraftfahrzeug abgelegt ist oder von dem Kraftfahrzeug abrufbar ist, weist die Maßnahme auf, dass das Kraftfahrzeug eine Anfrage-Botschaft aussendet. Dabei kann die Anfrage-Botschaft beispielsweise eine Cooperative Awareness Massage (CAM) sein, wie dies beispielsweise in der EN302637-2 Norm beschrieben ist, die einen Botschaftsaustausch zwischen Kraftfahrzeugen und Infrastruktur beschreibt. Die Anfrage-Botschaft ist dabei keine Ladeanfrage, sondern eine Anfrage nach Informationen. Dabei kann die Anfrage-Botschaft im einfachsten Fall ein Anwesenheitssignal sein, mit dem das Kraftfahrzeug sich gegenüber Infrastruktur oder anderen Kraftfahrzeugen anzeigt. Empfängt dann eine Ladeeinrichtung die Anfrage-Botschaft, so sendet diese eine Status-Botschaft aus. Hierzu ist die Ladeeinrichtung beispielsweise gemäß der Norm ETSI TS 101 556-1 ausgebildet. Die Status-Botschaft enthält dabei mindestens den Standort der Ladeeinrichtung. Das Kraftfahrzeug empfängt dann die Status-Botschaft und gleicht diese mit der Datenbank ab. Dabei wird die Ladeeinrichtung mit ihrem Standort in die Datenbank eingetragen, wenn diese vorher nicht in der Datenbank eingetragen war. Somit wird automatisiert die Datenbank aktualisiert. Dabei müssen die Ladeeinrichtungen nur dazu ausgebildet sein, die Anfrage-Botschaften zu empfangen und Status-Botschaften zu senden. Die Ladeeinrichtungen müssen also nicht allgemein online zugänglich sein (z.B. über das Internet oder ein Mobilfunknetz). Die Aktualisierung erfolgt dabei vorzugsweise in Echtzeit während des Vorbeifahrens.

Dabei wird die Anfrage-Botschaft abhängig von der gefahrenen Distanz ausgesendet.

Beispielsweise wird während der Fahrt eine Anfrage-Botschaft nach jedem gefahrenen Kilometer gesendet.

Weiter wird die Distanz in Abhängigkeit der Umgebung angepasst. So kann beispielsweise in der Stadt die Distanz reduziert werden, da einerseits die Empfangsqualität schlechter ist und andererseits mehr potentielle Ladeeinrichtungen vorhanden sind.

In einer Ausführungsform wird eine eingetragene Ladeeinrichtung bestätigt, wenn von einer eingetragenen Ladeeinrichtung eine Status-Botschaft vom Kraftfahrzeug empfangen wird. Somit wird sichergestellt, dass die vorhandenen Einträge aktuell und gültig sind.

Entsprechend wird in einer weiteren Ausführungsform eine eingetragene Laderichtung in der Datenbank deaktiviert oder gelöscht, wenn auf eine Anfrage-Botschaft des Kraftfahrzeugs keine Status-Botschaft der Ladeeinrichtung von dem Kraftfahrzeug empfangen wird. Dabei überprüft das Kraftfahrzeug, welche Ladeeinrichtungen im Umkreis der Reichweite der Anfrage-Botschaft in der Datenbank eingetragen sind.

In einer weiteren Ausführungsform sendet das Kraftfahrzeug seine Datenbank an andere Kraftfahrzeuge oder Infrastruktureinrichtungen und/oder das Kraftfahrzeug empfängt Datenbanken von anderen Kraftfahrzeugen oder Infrastruktureinrichtungen. Dies erlaubt ein noch schnelleres Aufbauen und Aktualisieren der Datenbank des Kraftfahrzeugs mit den Daten der anderen Datenbanken.

In einer weiteren Ausführungsform enthält die Status-Botschaft mindestens eine der nachfolgenden zusätzlichen Informationen:
- Anzahl der Ladesäulen
- Digitale Karte der Verortung
- Öffnungszeiten
- Preise
- Art der Ladesäulen
- Verfügbarkeit
- Wartezeit bei blockierten Ladesäulen
- Anzahl freier Ladesäulen
- Betreiber.

Dabei werden vorzugsweise nur statische Informationen in die Datenbank übernommen. Die anderen Informationen können aber berücksichtigt werden, falls das Kraftfahrzeug auch geladen werden soll.

Hinsichtlich der Ausbildung des Kraftfahrzeugs wird vollinhaltlich auf die vorangegangenen Ausführungen Bezug genommen.

Die Erfindung wird nachfolgend anhand eines bevorzugten Ausführungsbeispiels näher erläutert. Die Figuren zeigen:
- Fig. 1: eine schematische Verkehrssituation mit einem Kraftfahrzeug und
- Fig. 2: ein Flussdiagramm eines Verfahrens zum Aufbau und Aktualisieren einer Datenbank für Ladeeinrichtungen.

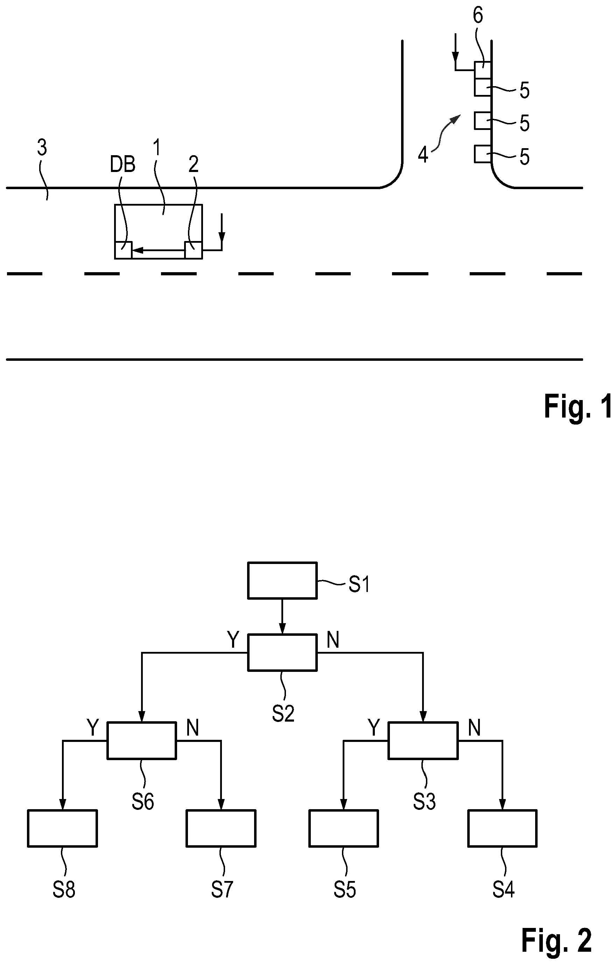

In der Fig. 1 ist schematisch eine Verkehrssituation mit einem Kraftfahrzeug 1 dargestellt. Das Kraftfahrzeug 1 ist mit einer Car2I-Schnittstelle 2 ausgebildet und fährt entlang einer Straße 3. Weiter ist eine Ladeeinrichtung 4 dargestellt, wobei die Ladeeinrichtung 4 drei Ladesäulen 5 und eine Car2I-Schnittstelle 6 aufweist. Während der Fahrt sendet die Car2I-Schnittstelle 2 Anfrage-Botschaften 7 aus, wie beispielsweise in der EN302637-2 beschrieben. Die Car2I-Schnittstelle 6 der Ladeeinrichtung 4 empfängt dann die Anfrage-Botschaft 7 des Kraftfahrzeugs 1 und sendet eine Status-Botschaft 8 zurück, die mindestens einen Standort der Ladeeinrichtung 4 enthält, vorzugsweise aber noch weitere Informationen enthält.

Das Kraftfahrzeug 1 weist weiter eine Datenbank DB für Ladeinrichtungen auf oder kann auf eine solche Datenbank DB zugreifen.

Das Verfahren zum Aufbauen und Aktualisieren der Datenbank DB soll nun anhand von Fig. 2 näher erläutert werden. In einem ersten Schritt S1 sendet das Kraftfahrzeug 1 die Anfrage-Botschaft 7 und wartet eine vorgegebene Zeitspanne, ob eine Status-Botschaft 8 empfangen wurde (S2). Wurde keine Status-Botschaft 8 empfangen, wird in einem weiteren Schritt S3 überprüft, ob in der Datenbank DB Ladeeinrichtungen mit Standortdaten vorhanden sind, von denen eine Status-Botschaft 8 zu erwarten gewesen wäre. Ist dies nicht der Fall (S4), so ist das Verfahren beendet bzw. springt wieder zu S1. Wäre hingegen eine Status-Botschaft 8 von mindestens einer Ladeeinrichtung zu erwarten gewesen, so wird diese Ladeeinrichtung in der Datenbank DB deaktiviert oder gelöscht (S5). Alternativ kann diese auch als "unsicher" markiert werden.

Wurde hingegen in Schritt S2 eine Status-Botschaft 8 empfangen, wird in einem Schritt S6 abgefragt, ob zu dem übermittelten Standort bereits ein Eintrag in der Datenbank DB existiert. Ist dies nicht der Fall, so wird die Ladeeinrichtung mit ihrem Standort und gegebenenfalls weiteren übermittelten Informationen in die Datenbank DB eingetragen (S7). Ist hingegen ein Eintrag bereits vorhanden, so wird abgeglichen, ob die übermittelten Informationenmit den abgespeicherten Informationen übereinstimmen. Bei Abweichungen (z.B. ist eine Ladesäule 5 hinzugekommen), wird der Eintrag korrigiert. Ansonsten wird der Eintrag nur bestätigt (S8).

Somit kann einfach während des Fahrens das Kraftfahrzeug 1 seine Datenbank DB aufbauen und aktualisieren, und zwar auch mit Ladeeinrichtungen 4, die keine Netzwerkanbindung aufweisen, solange diese nur eine Car2I-Schnittstelle 6 aufweisen.

### Bezugszeichenliste

- 1: Kraftfahrzeug
- 2: Car2I-Schnittstelle
- 3: Straße
- 4: Ladeeinrichtung
- 5: Ladesäule
- 6: Car2I-Schnittstelle
- 7: Anfrage-Botschaft
- 8: Status-Botschaft
- DB: Datenbank
- S1-S8: Schritte

## Patentansprüche

1. Verfahren zum Aufbauen und Aktualisieren einer Datenbank (DB) für Ladeeinrichtungen (4), wobei die Datenbank (DB) in einem Kraftfahrzeug (1) abgelegt ist oder von dem Kraftfahrzeug (1) abrufbar ist, wobei das Kraftfahrzeug (1) Anfrage-Botschaften (7) aussendet, wobei eine Ladeeinrichtung (4) die Anfrage-Botschaft (7) empfängt und eine Status-Botschaft (8) aussendet, wobei die Status-Botschaft (8) mindestens den Standort der Ladeeinrichtung (4) enthält, wobei das Kraftfahrzeug (1) die Status-Botschaft (8) empfängt und mit der Datenbank (DB) abgleicht, wobei die Ladeeinrichtung (4) mit ihrem Standort in die Datenbank (DB) eingetragen wird, wenn diese vorher nicht in der Datenbank (DB) eingetragen war, wobei eine solche Anfrage-Botschaft (7) je nach einer bestimmten gefahrenen Distanz ausgesendet wird, wobei die Distanz in Abhängigkeit der Umgebung des Kraftfahrzeugs (1) angepasst wird.

2. Verfahren nach Anspruch 1, **dadurch gekennzeichnet, dass** eine eingetragene Ladeeinrichtung (4) bestätigt wird, wenn von einer eingetragenen Ladeeinrichtung (4) eine Status-Botschaft (8) von Kraftfahrzeugen (1) empfangen wird.

3. Verfahren nach Anspruch 1 oder 2, **dadurch gekennzeichnet, dass** eine eingetragene Ladeeinrichtung (4) in der Datenbank (DB) deaktiviert oder gelöscht wird, wenn auf eine Anfrage-Botschaft (7) des Kraftfahrzeuges (1) keine Status-Botschaft (8) der Ladeeinrichtung (4) von dem Kraftfahrzeug (1) empfangen wird.

4. Verfahren nach einem der vorangegangenen Ansprüche, **dadurch gekennzeichnet, dass** das Kraftfahrzeug (1) seine Datenbank (DB) an andere Kraftfahrzeuge oder Infrastruktureinrichtungen sendet und/oder dass das Kraftfahrzeug (1) Datenbanken (DB) von anderen Kraftfahrzeugen oder Infrastruktureinrichtungen empfängt.

5. Verfahren nach einem der vorangegangenen Ansprüche, **dadurch gekennzeichnet, dass** die Status-Botschaft (8) mindestens eine der nachfolgenden zusätzlichen Informationen enthält:
- Anzahl der Ladesäulen (5)
- digitale Karte der Verortung
- Öffnungszeiten
- Preise
- Art der Ladesäulen (5)
- Verfügbarkeit
- Wartezeit bei blockierten Ladesäulen (5)
- Anzahl freier Ladesäulen (5)
- Betreiber.

6. Kraftfahrzeug (1), wobei das Kraftfahrzeug (1) eine Car2I-Schittstelle (2) aufweist, wobei das Kraftfahrzeug (1) eine Datenbank (DB) für Ladeeinrichtungen (4) aufweist oder derart ausgebildet ist, auf eine Datenbank (DB) für Ladeeinrichtungen (4) zuzugreifen, wobei das Kraftfahrzeug (1) weiter derart ausgebildet ist, eine Anfrage-Botschaft (7) auszusenden und eine Status-Botschaft (8) zu empfangen, wobei eine empfangene Status-Botschaft (8) mit der Datenbank (DB) abgeglichen wird, wobei eine Ladeeinrichtung (4) mit ihrem Standort in die Datenbank (DB) eingetragen wird, wenn diese vorher nicht in der Datenbank (DB) eingetragen war, wobei eine solche Anfrage-Botschaft (7) je nach einer bestimmten gefahrenen Distanz ausgesendet wird, wobei die Distanz in Abhängigkeit der Umgebung des Kraftfahrzeugs (1) angepasst wird.

## Claims

1. Method for setting up and updating a database (DB) for charging facilities (4), wherein the database (DB) is stored in a motor vehicle (1) or can be retrieved by the motor vehicle (1), wherein the motor vehicle (1) sends out request messages (7), wherein a charging facility (4) receives the request message (7) and sends out a status message (8), wherein the status message (8) contains at least the location of the charging facility (4), wherein the motor vehicle (1) receives the status message (8) and compares it with the database (DB), wherein the charging facility (4) is entered into the database (DB) with its location if it was not previously entered in the database (DB), wherein such a request message (7) is sent out depending on a specific distance traveled, wherein the distance is adapted depending on the surroundings of the motor vehicle (1).

2. Method according to claim 1, **characterized in that** a registered charging facility (4) is confirmed when a status message (8) from a registered charging facility (4) is received by motor vehicles (1).

3. Method according to claim 1 or 2, **characterized in that** a registered charging facility (4) in the database (DB) is deactivated or deleted if no status message (8) from the charging facility (4) is received by the motor vehicle (1) in response to a request message (7) from the motor vehicle (1).

4. Method according to any of the preceding claims, **characterized in that** the motor vehicle (1) sends its database (DB) to other motor vehicles or infrastructure facilities **and/or in that** the motor vehicle (1) receives databases (DB) from other motor vehicles or infrastructure facilities.

5. Method according to any of the preceding claims, **characterized in that** the status message (8) contains at least one of the following pieces of additional information:
- number of charging stations (5)
- digital map of the location
- opening hours
- prices
- type of charging stations (5)
- availability
- waiting time for blocked charging stations (5)
- number of free charging stations (5)
- operator.

6. Motor vehicle (1), wherein the motor vehicle (1) has a Car21 interface (2), wherein the motor vehicle (1) has a database (DB) for charging facilities (4) or is designed to access a database (DB) for charging facilities (4), wherein the motor vehicle (1) is further designed to send out a request message (7) and to receive a status message (8), wherein a received status message (8) is compared with the database (DB), wherein a charging facility (4) is entered into the database (DB) with its location if it was not previously entered into the database (DB), wherein such a request message (7) is sent out depending on a specific distance traveled, wherein the distance is adapted depending on the surroundings of the motor vehicle (1).

## Revendications

1. Procédé de constitution et de mise à jour d'une base de données (DB) pour des dispositifs de charge (4), dans lequel la base de données (DB) est stockée dans un véhicule automobile (1) ou peut être consultée par le véhicule automobile (1), dans lequel le véhicule automobile (1) émet des messages de demande (7), dans lequel un dispositif de charge (4) reçoit le message de demande (7) et émet un message d'état (8), dans lequel le message d'état (8) contient au moins l'emplacement du dispositif de charge (4), dans lequel le véhicule automobile (1) reçoit le message d'état (8) et le compare à la base de données (DB), dans lequel le dispositif de charge (4) est enregistré avec son emplacement dans la base de données (DB) si celui-ci n'était pas enregistré auparavant dans la base de données (DB), dans lequel un tel message de demande (7) est émis en fonction d'une distance parcourue déterminée, dans lequel la distance est adaptée en fonction de l'environnement du véhicule automobile (1).

2. Procédé selon la revendication 1, **caractérisé en ce qu'**un dispositif de charge (4) enregistré est confirmé lorsqu'un message d'état (8) de véhicules automobiles (1) est reçu par un dispositif de charge (4) enregistré.

3. Procédé selon la revendication 1 ou 2, **caractérisé en ce qu'**un dispositif de charge (4) enregistré dans la base de données (DB) est désactivé ou supprimé si, en réponse à un message de demande (7) du véhicule automobile (1), aucun message d'état (8) du dispositif de charge (4) n'est reçu par le véhicule automobile (1).

4. Procédé selon l'une des revendications précédentes,
**caractérisé en ce que** le véhicule automobile (1) envoie sa base de données (DB) à d'autres véhicules automobiles ou à des installations d'infrastructure **et/ou en ce que** le véhicule automobile (1) reçoit des bases de données (DB) d'autres véhicules automobiles ou d'autres installations d'infrastructure.

5. Procédé selon l'une des revendications précédentes,
**caractérisé en ce que** le message d'état (8) contient au moins l'une des informations supplémentaires suivantes :
- nombre de bornes de recharge (5)
- carte numérique de localisation
- heures d'ouverture
- prix
- type de bornes de recharge (5)
- disponibilité
- temps d'attente en cas de bornes de recharge (5) bloquées
- nombre de bornes de recharge (5) libres
- opérateur.

6. Véhicule automobile (1), dans lequel le véhicule automobile (1) présente une interface Car2I (2), dans lequel le véhicule automobile (1) présente une base de données (DB) pour des dispositifs de charge (4) ou est conçu de manière à accéder à une base de données (DB) pour des dispositifs de charge (4), dans lequel le véhicule automobile (1) est en outre conçu de manière à émettre un message de demande (7) et à recevoir un message d'état (8), dans lequel un message d'état (8) reçu est comparé à la base de données (DB), dans lequel un dispositif de charge (4) est enregistré avec son emplacement dans la base de données (DB) si celui-ci n'était pas enregistré auparavant dans la base de données (DB), dans lequel un tel message de demande (7) est émis en fonction d'une distance parcourue déterminée, dans lequel la distance est adaptée en fonction de l'environnement du véhicule automobile (1).
